Europäisches Patentamt

European Patent Office

Office européen des brevets

(11) Publication number: **0 113 981**
**A2**

# (12) EUROPEAN PATENT APPLICATION

(21) Application number: 83307657.3

(22) Date of filing: 15.12.83

(51) Int. Cl.³: **H 02 G 3/04**

(30) Priority: 16.12.82 GB 8235847

(43) Date of publication of application: 25.07.84
Bulletin 84/30

(84) Designated Contracting States: **AT DE FR GB**

(71) Applicant: **EGA LIMITED, St. Asaph, Clwyd North Wales LL17 OER (GB)**

(72) Inventor: **Layton, David Edwart, 3 Violet Grove Rhyl, Clwyd North Wales (GB)**

(74) Representative: **Fisher, Bernard et al, Raworth, Moss & Cook 36 Sydenham Road, Croydon Surrey CR0 2EF (GB)**

(54) Improvements in trunking.

(57) Trunking for services such as electric cables, telephone cables and the like.

The trunking comprises an elongate channel member (12) and an elongate cover member (14) dimensioned and arranged releasably to be engaged by the channel member. The channel member (12) has opposed side walls (12a, 12b) each provided at a position spaced from its distal edge with an inwardly directed protrusion (16, 18) shaped to form with the internal surface (12a, 12d) of the wall (12a, 12b) extending to the distal edge a generally hook-shaped member to form first engagement means. The cover member (14) is provided at or near each longitudinal edge with a flange (20, 22) having an inwardly directed protrusion to form second engagement means, the channel member (12) and cover member (14) being so dimensiond that, in use, the cover member (14) can be placed on the channel member (12) and snapped into engagement therewith by engagement of each second engagement means by a corresponding first engagement menas.

- 1 -

IMPROVEMENTS IN TRUNKING.

This invention relates to trunking for services such as electric cables, telephone cables and the like and concerns trunking comprising an elongate channel member and an elongate cover member arranged to be secured thereto.

According to the present invention there is provided trunking comprising an elongate channel member and an elongate cover member dimensioned and arranged releasably to be engaged by the channel member, the channel member having opposed side walls each provided at a position spaced from its distal edge with an inwardly directed protrusion shaped to form with the internal surface of the wall extending to the distal edge a generally hook-shaped member to form first engagement means, the cover member being provided at or near each longitudinal edge with a flange having an inwardly directed protrusion to form second engagement means, the channel member and cover member being so dimensioned that, in use, the cover member can be placed on the channel member and snapped into engagement therewith by engagement of each second engagement means by a corresponding first engagement means.

The channel and cover member may be of a plastics material and one suitable material, at least for the channel member, is extruded thermoplastics unplasticised polyvinylchloride (PVC).
As well as its known insulating properties, plastics
material, especially the aforementioned PVC, provides
some resilience to the hook-shaped members thereby
allowing them to open slightly as the protrusion on the
second engagement means engages the end of the hook
as it is pushed passed it and into position in
engagement with the hook-shaped member. As soon as
the protrusion has passed the end of the hook, the
hook returns towards its original position thereby
securing the second engagement means in the first
engagement means.

The inwardly directed protrusion of the first
engagement means may comprise an upwardly and
outwardly directed engagement surface for engaging
the protrusion on the second engagement means thereby
to hold the two pairs of engagement means firmly and
securely.

The first engagement means may terminate in an
upwardly and inwardly directed edge surface arranged
slidingly to be engaged by the protrusion of the
second engagement means as it is inserted in the
hook-shaped member thereby to facilitate the flexing
of the hook-shaped member to receive the second engagement member.

The walls of the channel member may further be
provided at generally corresponding positions intermediate the base of the channel and the first
engagement means with inwardly directed flanges for
supporting a second cover member thereby to divide the
trunking into two elongate compartments arranged one
above the other.

Means may be provided on the base of the
channel member for supporting an inner wall member or
members for dividing the trunking into two or more longitudinally extending compartments.

The invention will now be described by way of example with reference to the accompanying drawings, in which:

Fig. 1 is a cross-sectional view of one embodiment of trunking according to the invention;

Fig. 2 is a cross-sectional view of another embodiment according to the invention.

Fig. 3 is a cross-sectional view of a third embodiment according to the invention.

In the drawings, like parts are given like references.

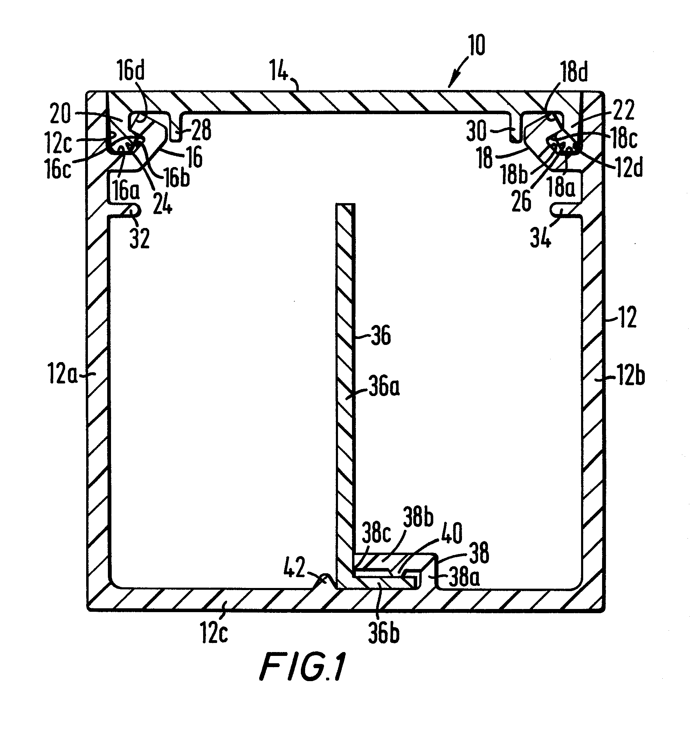

Referring to Fig. 1 of the drawings, there is shown trunking 10 suitable for housing electric cable and/or telephone cable.

The trunking 10 comprises an elongate channel 12 and an elongate cover member 14 manufactured from a plastics material such as extruded thermoplastics unplasticised PVC. The channel 12 has opposed side walls 12a, 12b joined by a base wall 12c.

Extending inwardly from each side wall 12a and 12b and at a position spaced from its distal edge is an engagement member 16 and 18 respectively. The members 16 and 18 are similar. Each member 16, 18 comprises a first surface 16a, 18a extending inwardly and substantially normal to the wall member, an intermediate surface 16b, 18b extending inwardly and upwardly and a third surface 16c, 18c extending upwardly and outwardly terminating in an edge surface 16d, 18d extending inwardly and upwardly so that the member 16, 18 with the internal surface 12c, 12d of its associated wall forms a generally hook-shaped engagement member in cross section.

The cover member 14 is generally planar and dimensioned to be a snug fit between the walls of the channel member 12. Along each longitudinal edge, the cover 14 is provided with an engagement flange 20, 22 having an inwardly directed protrusion 24, 26 respectively. The members 20, 22 with their respective protrusions 24, 26 are so dimensioned with respect to the hook-shaped members 16, 18 that when the cover 14 is placed in position over the channel member 12 and then pressed towards it, the protrusions 24, 26 first slide down the edge surfaces 16d, 18d and force open the hook-shaped members so that they can pass into the part defined by the surfaces 12c, 16a, b, c and 12d, 18a, b, c respectively. When the protrusions 24, 26 have passed the respective edge surfaces 16d, 18d, the natural resilience of the material causes the hook-shaped members 16, 18 to return towards their original position firmly to engage and secure the flanges 20, 22 and hence the cover 14 in position.

Ribs 28 and 30 extending from the internal surface of the cover member 14 act as additional guide members when positioning the cover and serve to prevent excessive straining of the members 16 and 18.

Thus, there has been described trunking in which the cover member 14 can be readily secured to and removed from the channel member 12 and in which the cover 14 fits flush with the edges of the channel to provide a simple and neat trunking arrangement. The cover 14 and flanges 20, 22 could, of course, be dimensioned so that the cover extends over the edges of the channel and finishes flush with the external surfaces of the side walls of the channel 12.

To facilitate the division of the trunking into two compartments the side walls 12a, 12b are provided with inwardly directed ledges 32, 34 respectively, and positioned intermediate the members 16, 18 and the base 12c. A second cover member (not shown) can then be fitted on the ledges 32, 34 to provide two separate elongate compartments one above the other. The second cover member could be planar or could take other forms such as a corrugated form and could be dimensioned, at least along its longitudinal edges, to fit snugly in the recess formed by the upper surface of the ledge 32, 34 and the lower surface of the members 16, 18 respectively.

Additionally, or alternatively, the trunking 10 can be divided by a wall or walls extending from the base 12c into two or more compartments which extend side by side along the trunking.

Fig. 1 shows one such arrangement for securing and supporting a dividing wall 36. The securing and supporting means comprises a cantilever member 38 having a part 38a upstanding from the base 12c and a part 38b extending parallel to the base. A frusto-conical rib 40 is formed on the undersurface of the part 38b.

A rib 42 of conical cross-section is formed on the base and spaced from the free end of the cantilever 38 by a distance determined inter alia, by the thickness of the wall 36 to be mounted. The wall 36 is of L-shaped cross-section having an upright 36a and a base 36b and is secured in position by introducing the free end of the part 36b between the rib 42 and under the cantilever part 38b and pushing it to the right (in the drawing). The adjacent conical surface of the rib 42 assists in guiding the wall member 36 and serves as a stop to prevent it from sliding out from under the cantilever member 38. Likewise the end of the member 38b is radiused at 38c to facilitate the introduction of the wall member.

The size of the gap between the lowermost surface of the rib 40 and the upper surface of the base 12c is just less than the thickness of the wall member 36b so that the cantilever member 38b is distorted slightly upwardly by the introduction of the wall member 36b, the resilience of the cantilever serving to secure the wall in position.

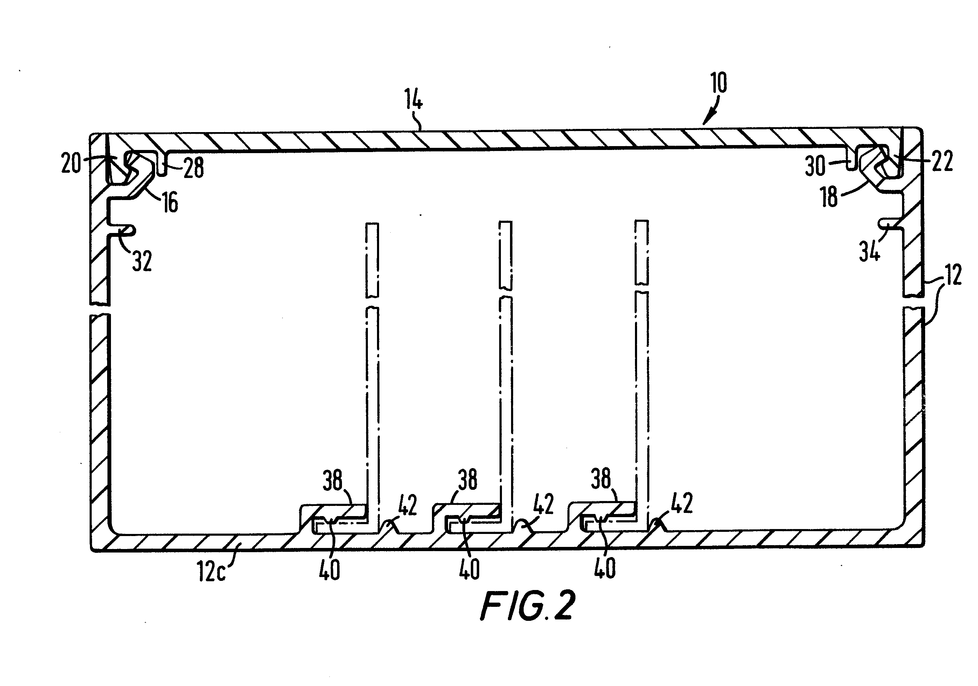

Fig. 2 shows another embodiment of trunking according to the invention in which the base 12c of the channel member 12 has been modified to accept up to three wall members for dividing the channel into up to four side-by-side longitudinal compartments. In each case the wall fixing and securing means comprises a cantilever 38-rib 42 combination as described with reference to Fig. 1.

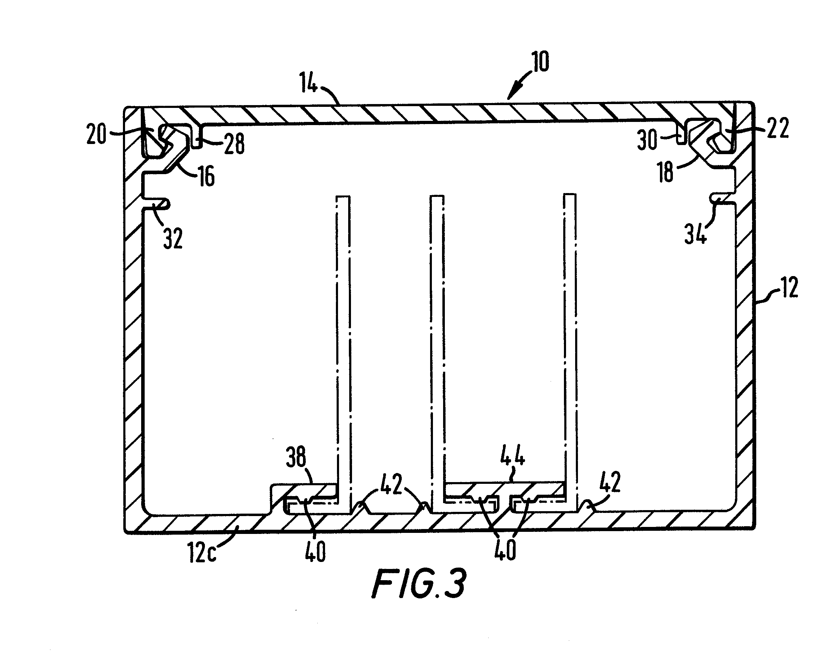

Fig. 3 shows a further embodiment of trunking according to the invention similar to that described with reference to Figs. 1 and 2 but in which two of the L-shaped cantilever members 38 have been replaced by a T-shaped member 44.

CLAIMS

1.      Trunking comprising an elongate channel member (12) and an elongate cover member (14) dimensioned and arranged releasably to be engaged by the channel member (12) characterised in that the channel member (12) having opposed side walls (12a, 12b) each provided at a position spaced from its distal edge with an inwardly directed protrusion (16, 18) shaped to form with the internal surface (12a, 12d) of the wall (12a, 12b) extending to the distal edge a generally hook-shaped member to form first engagement means, the cover member (14) being provided at or near each longitudinal edge with a flange (20, 22) having an inwardly directed protrusion (24, 26) to form second engagement means, the channel member (12) and cover member (14) being so dimensioned that, in use, the cover member (14) can be placed on the channel member (12) and snapped into engagement therewith by engagement of each second engagement means by a corresponding first engagement means.

2.      Trunking according to Claim 1, in which the channel (12) and cover member (14) are of a plastics material.

3.      Trunking according to Claim 2, in which the channel member (12) or the cover member (14) or both are of extruded thermoplastics unplasticised polyvinylchloride (PVC).

4.      Trunking according to Claim 1, 2 or 3, in which the inwardly directed protrusion (16, 18) of the first engagement means comprises an upwardly and outwardly directed engagement surface (16a, 18c) for engaging the protrusion (24, 26) on the second engagement means (20, 22) thereby to hold the two pairs of engagement means firmly and securely.

5. Trunking according to Claim 1, 2, 3 or 4, in which the first engagement means terminates in an upwardly and inwardly directed edge surface (16d, 18d) arranged slidingly to be engaged by the protrusion (24, 26) of the second engagement means as it is inserted in the hook-shaped member thereby to facilitate the flexing of the hook-shaped member to receive the second engagement member.

6. Trunking according to any one of Claims 1 to 5, wherein the inner surface of the cover member is provided with restraining members (28, 30) extending longitudinally thereof and parallel to and spaced from their associated flanges (20, 22) by an amount sufficient to allow the first engagement member to pass between its associated flange and restraining member but to restrict distortion thereof.

7. Trunking according to any one of the preceding claims, in which the walls (12a, 12b) of the channel member (12) are further provided at generally corresponding positions intermediate the base of the channel and the first engagement means with inwardly directed flanges (32, 34) for supporting a second cover member thereby to divide the trunking into two elongate compartments arranged one above the other.

8. Trunking according to any one of the preceding claims, further comprising means (38) provided on the base (12c) of the channel member (12) for supporting an inner wall member (36) or members for dividing the trunking into two or more longitudinally extending compartments.

9. Trunking according to Claim 8, in which the inner wall (36) has substantially L-shaped cross sections (36a, 36b) and the dividing means comprises a cantilever member (38) having a first part (38a) extending upwardly from the base (12c) of the channel member and a second part (38b) extending substantially parallel to and spaced from said base whereby the base (36b) of the L-shaped wall can be securely received between the base (12c) of the channel and the second part (38b) of the cantilever member.

10. Trunking according to Claim 9, wherein the second part (38b) of the cantilever member (38) is provided with a depending protrusion (40) dimensioned securely to grip the base (36b) of the wall member.

*FIG.1*

0113981

FIG.2

0113981

FIG.3